# EUROPEAN PATENT APPLICATION

(11) **EP 0 952 115 A1**
(43) Date of publication of application: **27.10.1999**
(21) Application number: 99301094.1
(22) Date of filing: 15.02.1999
(51) Int. Cl.: C02F 1/30, C02F 1/46

(54) **Process for preparing alcohol beverages with reduced negative effects to the human liver**

(30) Priority: 17.02.1998 US 24622
(71) Applicant: Kim, Hee Jung, Seoul 138-220 (KR)
(72) Inventor: Kim, Hee Jung, Songpa-ku/ Seoul 138-2202 (KR); Shin, Myoung Soo, Seoul 136-020 (KR); Park, Sang Chul, Seocho-ku - Seoul 137-044 (KR)
(74) Representative: Evens, Paul Jonathan

(57) **Abstract**

The process involves conventional methods of preparing alcoholic beverages with the substitution of a specially prepared water in lieu of the normal distilled or filtered water commonly used in fermentation processes. The specially prepared water has reduced viscosity and is produced by a multi-step process which comprises a plurality of separate batch processes, wherein each successive process yields a product with a lower viscosity than the product yielded from the previous process. The first batch process comprises the passage of an electric current through water without the presence of electrolytes, which yields water with a lowered viscosity. The resulting water is then placed into a series of batch energizer reactors, wherein the water is successively irradiated with far infrared light in each batch reactor for a specified resident time period, each successive reactor yielding a product with a lower viscosity. Receivers at each batch reactor allow the water to be properly drained from the reactors.

## Description

### BACKGROUND OF THE INVENTION

### 1. Field of the invention

The present invention pertains to processes used to manufacture alcoholic beverages, and specifically to the use of irradiated and electrolyzed water in the preparation of said alcoholic beverages.

### 2. Description of the Prior Art

Consumption of alcoholic beverages are commonly known to have negative effects to the human liver due to the effects of alcohol on the fat content of the human liver.

Prior art in this field teach several remedies to this problem. Prior art teaches non-alcoholic beverages that contain nominal amounts of alcohol that have the taste of alcohol. This remedy is not always sufficient because the other effects of alcohol on the body and mind, such as drunkenness, may actually be a desired end by the consumer. In addition, the flavor of such beverages are not fully authentic because they do not have the alcoholic content.

Due to the non-linear, angled structure of water (H2O), water is a polar molecule. In typical liquid form, clusters of water molecules form as hydrogen bonding occurs between the water molecules due to their polarity. These clusters inhibit the flow of water and thus increase the viscosity of water. The clusters of water molecules may be dissociated in order to reduce the viscosity of water by decreasing the net size of the clusters of water molecules. The resulting dissociated clusters of water molecules are markedly more polar than the previously conglomerated water molecule clusters, and thus have a higher affinity to fat particles passing in the blood stream.

Prior art in this field of art have not taught any processes similar to the one taught by the present invention. Hence, this process is novel and unanticipated.

Consequently, the primary object of the present invention is to provide a process of manufacturing alcoholic beverages with reduced negative effects to the human liver.

A further object of the present invention is to provide a process that lowers the viscosity of water that does not require significantly expensive equipment.

### SUMMARY OF THE INVENTION

The present invention is a process that yields alcoholic beverages with reduced negative effects to the human liver. The process involves conventional methods of preparing alcoholic beverages with the substitution of a specially prepared water in lieu of the normal distilled and/or filtered water commonly used in fermentation processes.

The preparation of the specially prepared water comprises a multi-step process that yields water with a lowered viscosity. The process comprises a plurality of separate batch processes, wherein each successive process yields a product with a lower viscosity than the product yielded from the previous process. The first process comprises the passage of an electric current through water without the presence of electrolytes, which yields water with a lowered viscosity. This is achieved by reducing the size of water molecule clusters formed due to hydrogen bonding. The reduction of size of the clusters is achieved through electrolysis of the water. The electrolysis of the water permanently breaks the hydrogen bonds between the water molecules and thus dissociates the clusters of water molecules, thereby reducing the viscosity of water. The resulting water is then placed into a series of batch energizer reactors, wherein the water is successively irradiated with far infrared light in each batch reactor for a specified resident time period, each successive reactor yielding a product with a lower viscosity. Far infrared light also provides the energy necessary to break the hydrogen bonding forces that hold the water molecule clusters together. Receivers at each batch reactor allow the water to be properly drained from the reactors.

The effluent taken from the final receiver may be fed into the flow scheme of a conventional brewing process to yield effluent which when consumed, has reduced negative effects to the human liver.

These together with other objects of the invention are explained clearly in the claims annexed to and forming a part of this disclosure. For a better understanding of the invention, its operating advantages and the specific objects attained by its use, reference should be made to the accompanying drawings and descriptive matter in which there are illustrated preferred embodiments of the invention.

### BRIEF DESCRIPTION OF THE DRAWINGS

For a better understanding of the principle and nature of the present invention, reference should be made to the following detailed description taken in connection with the accompanying drawings in which:

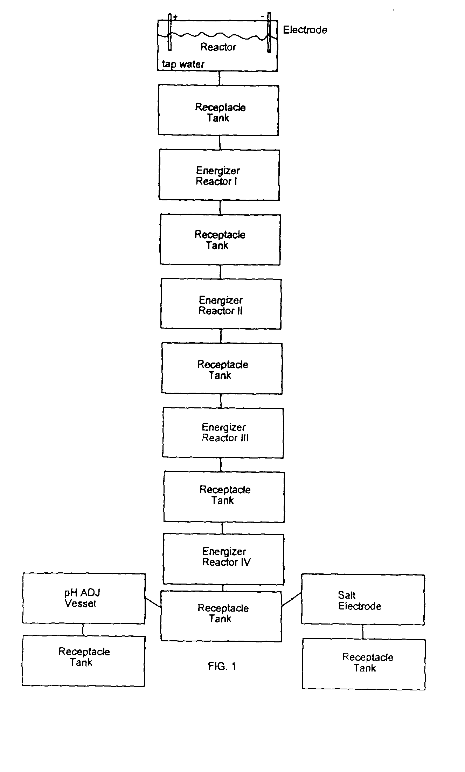

**FIG. 1** is a block flow diagram of the process for preparing the water used in preparing alcoholic beverages with reduced negative effects to the human liver.

### DETAILED DESCRIPTION OF THE PREFERRED EMBODIMENT

Conventional brewing processes comprise milling malted barley and other grains in a mill. The cracked malt, also known as "grist", is then mixed with hot water in the mash tun, which enables enzymes in the barley in the barley seed to convert starches into fermentable and unfermentable sugars. The resulting sweet liquid, called "wort", is then fed into the boil kettle, wherein hops are added at varying time intervals during the kettling process. Resins and oils in the selected hops contribute to the consistency, flavor and aroma of the resulting ale or lager. The hopped wort is then cooled and pumped into fermentation tanks, wherein yeast is added, and fermentation commences. The yeast then converts fermentable sugars into alcohol and carbon dioxide, while the unfermentable sugars remain in the solution, contributing to the flavor of the beverage. After 3-5 days, the active ferment process is completed, and the tank is sealed in order to naturally carbonate the solution. The completion of the active ferment process is determined by measuring the specific gravity of the solution within the tank. Further filtering and processing tanks may be implemented after or between these primary steps of preparation, depending on the specific brewery and/or specific desired product.

Referring to FIG. 1, the preparation of the water used in the present invention is a multi-step process that comprises a plurality of batch processes, wherein the product yielded from a step in the overall process is then successively used as the feed for the subsequent batch process.

The first batch process involves the passage of an electrical current through water. The water used is preferably filtered and is without electrolytes or contaminants, so as to maximize the oxygen content within the water, as water with dissolved contaminants like salt is unable to be fully saturated with oxygen. The voltage of the current is preferably between 50 and 100 volts. The process may use multiple cathodic and anodic leads, so as to maximize the effects of the current. In addition, stirrers may be employed in the reaction as well in order to ensure exposure to the entire solution. This step yields a product with a lower viscosity by dissociating the water molecule clusters which inhibit fluid motion and thus cause the viscosity of a solution to increase.

The second batch process comprises an energizing reactor that comprises a batch process tank reactor with several far infrared light emitters. These emitters are positioned along the tank so as to maximize exposure to the water. The effluent yielded from the first batch process is then fed into the energizer reactor where the water is irradiated with far infrared light by the emitters. This irradiation by far infrared light also has the net effect of reducing the viscosity of the exposed water by providing the energy to break the hydrogen bonding occurring between the clustered water molecules, thereby decreasing the viscosity of the water by reducing the size of the inhibiting clusters.

A plurality of these energizer reactors are placed in series, wherein the effluent from one energizer reactor serves as the feed for the subsequent energizer reactor down the process chain. The amount of change in the viscosity of water is proportional to the resident time of exposure to the far infrared light. Additional energizing reactors may be placed in the process chain, but considerable efficiency is lost with each subsequent reactor.

Effluent from the fourth energizer reactor may be fed to a pH adjusting vessel wherein the solution is introduced to basic or acidic compounds in order to reduce adjust the pH of the solution. Effluent from the fourth energizer reactor may also be fed into a reactor with an active salt electrode.

## Claims

1. A process for preparing water used in the preparation of alcoholic beverages comprising:
a. filtration of water;
b. electrolysis of said water using a cathode and anode, and a current of voltage ranging between 50 to 100 volts;
c. irradiation of said water by far infrared light.

2. A process for preparing water used in the preparation of alcoholic beverages as mentioned in claim 1, wherein said water is irradiated by far infrared light of varying wavelengths.

3. A process for preparing water used in the preparation of alcoholic beverages as mentioned in claim 1, wherein pH of said water is adjusted.

4. A process for preparing water used in the preparation of alcoholic beverages as mentioned in claim 1, wherein said water is introduced into a salt electrode.

5. A process for preparing water used in the preparation of alcoholic beverages as mentioned in claim 1, wherein said water is introduced into a salt electrode insoluble in water.

6. A process for manufacturing an alcoholic beverage, comprising fermentation of sugars dissolved in water, wherein the water is processed in accordance with any one of claims 1 to 5.

7. An alcoholic beverage comprising water processed to provide smaller clusters of water molecules of higher polarity than conventional distilled or filtered water used for fermentation.
